# EUROPEAN PATENT SPECIFICATION

(11) **EP 0 496 152 B1**
(45) Date of publication and mention of the grant of the patent: **27.12.1996**
(21) Application number: 91309712.7
(22) Date of filing: 21.10.1991
(51) Int. Cl.: H04L 25/30

(54) **Viterbi equaliser with variable number of states**
Viterbi-Entzerrer mit einer variablen Anzahl von Zuständen
Egaliseur de Viterbi à nombre variable d'états

(30) Priority: 24.01.1991 GB 9101570
(43) Date of publication of application: 29.07.1992
(73) Proprietor: ROKE MANOR RESEARCH LIMITED, Romsey, Hampshire, SO51 0ZN (GB)
(72) Inventor: Waters, Patrick Hugh, Totton, Hampshire 5O4 2SU (GB)
(74) Representative: Allen, Derek

(56) References cited:
- PROCEEDING OF THE 14TH ALLERTON CONFERENCE ON CIRCUIT AND SYSTEM THEORY, September 1976, pages 695-703; J. CONAN / D. HACCOUN: 'Reduced-State Viterbi Decoding of Convolutional Codes.'
- JOURNAL OF THE INSTITUTION OF ELECTRONIC AND RADIO ENGINEERS vol. 56, no. 5, May 1986, LONDON GB pages 197 - 206 S.B. AFTELAK / A.P. CLARK: 'Adaptive reduced-state Viterbi algorithm detector.'
- IEEE GLOBAL TELECOMMUNICATIONS CONFERENCE & EXHIBITION GLOBECOM '89, 27.-30.11.1989, Dallas, US, vol. 3, pages 1714-1718, IEEE, New York, US; XP-144866; H. YASHIMA et al.: A New Type of Viterbi Decoding with Path Reduction'
- J.G. PROAKIS: 'Digital Communications, 2nd Edition' 1989 , MCGRAW-HILL , NEW YORK, US;

## Description

This invention relates to digital communication systems and more especially it relates to equalisers for use in such systems.

A received radio signal in a digital radio communication system is often subject to multipath interference which may result in intersymbol interference. The intersymbol interference may be so severe that reliable communications are not possible without the use of an equaliser at the receiver. A Viterbi algorithm is often used to construct a high performance equaliser but this is computationally intensive and consequently consumes a significant amount of power which may be unacceptable for portable apparatus such as hand held portable equipment with a small battery.

The computational load of a Viterbi equaliser is determined by the number of states in the Viterbi algorithm. Conventionally the number of states provided is determined by the worst case multipath interference with which the radio system is designed to operate. In a mobile radio environment, multipath interference is dynamic and most often is not as severe as the worst case multipath interference in the presence of which the system will satisfactorily continue to operate.

According to the present invention an equaliser of the kind using a Viterbi algorithm for signal processing to reduce the effects of multipath interference is disclosed and comprises means for measuring multipath interference duration, signal processor means operative in accordance with a Viterbi algorithm having a selected number of states, and means for adapting the number of states in dependence upon multipath interference duration as measured.

Thus in an equaliser according to the present invention the number of states within the Viterbi equaliser is reduced as necessary to the number required for reliable reception with the multipath interference experienced. In turn this results in a lower computational load for the equaliser and a correspondingly lower power consumption.

One embodiment of the invention will now be described by way of example with reference to the accompanying drawings in which:
Figure 1 is a block schematic diagram of an equaliser;
Figure 2 is a diagram which serves to illustrate a windowing function; and,
Figure 3 is a flow diagram which shows a sequence of operations performed by a windowing unit which forms a part of the block schematic diagram of Figure 1.

High performance radio links increasingly use digital techniques and are expected to operate whilst equipment is mobile. This trend results in a requirement for high integrity radio links which must function in the presence of severe multipath interference. The multipath interference may not only be severe because of the time duration from the earliest path to the last path but also because it is dynamic in character due to the fact that the radio equipment itself is moving and due also to the fact that at least some of the reflectors which give rise to the multipath interference may also be moving.

It will be appreciated that multipath interference may continue for several symbol periods and for example the group special mobile (GSM) pan european digital cellular radio system is designed to operate with severe multipath components delayed by 16 µsecs i.e. 4.3 bit periods.

It is well known that multipath effects may be minimised by using an equaliser, the maximum multipath span determining with other factors the size of equaliser required. For a known equaliser based upon the Viterbi algorithm the size of the equaliser is dependant upon the number of states of the algorithm (necessarily a power of 2) and for each increase in multipath interference duration by one symbol period the number of Viterbi equaliser states doubles.

The number of arithmetical operations required to realise a Viterbi equaliser is proportional to the number of states. In turn a greater number of arithmetical operations increases the power consumption of a VLSI Viterbi equaliser. It is important to recognise that many digital mobile radio equipments will be portable hand held terminals where battery life is critical. As hereinbefore explained a Viterbi algorithm based equaliser is capable of very high performance ensuring reliable radio communications but tends to be computationally intensive and hence consumes significant power which is clearly a serious limiting factor with portable hand held terminals. An equaliser which will hereinafter be described with reference to the drawings, provides for adaptation of the number of Viterbi algorithm states to a minimum required for satisfactory reception, whereby computational load is reduced and power consumption is reduced correspondingly.

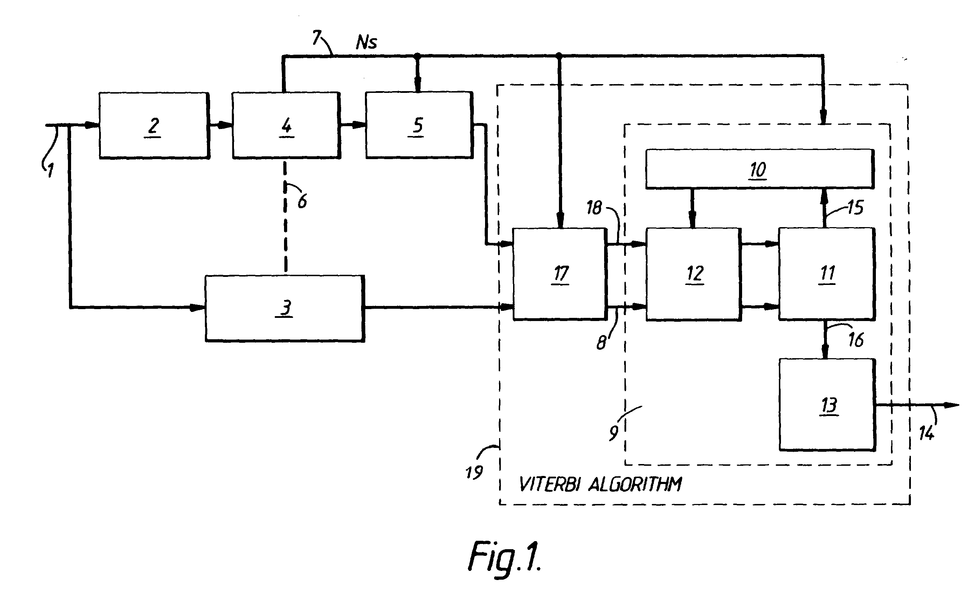

A received radio signal is first filtered to remove out of band signals and then frequency translated to a low intermediate frequency or even to base band (i.e. zero intermediate frequency.) Referring now to the drawings, samples of these translated signals are first digitised (by means not shown) and fed to an input line 1 of an equaliser as shown in Figure 1. The input line 1 is coupled to a measurement unit 2 and also to a buffer store unit 3. The measurement unit 2 serves to examine the received signal to measure the multipath interference level. The character of multipath interference as it affects received data must be accurately known whereby the equaliser can be appropriately set up to cope with it. Because the radio environment is dynamic due to the movement of equipment and/or reflectors, multipath interference is measured for each block of data. The unit 2 measures multipath interference by comparing a received signal with what that received signal is expected to be. This comparison is facilitated by the transmission of a known sequence of bits within each block of data. This is known as an embedded training sequence. The measurement unit captures a sample of the received data spanning an expected time of arrival of the training sequence. This sample is correlated against the expected form of the training sequence to produce samples which represent a complex channel response and these samples provide an input signal for a windowing unit 4.

Windowing units are well known and conventionally the windowing unit 4 is used to select a fixed length time segment of the measured channel response which contains the greatest energy. The time segment is selected by first calculating the channel response from the complex response by squaring and summing the complex samples and then in effect sliding a window over the power samples to choose a window position that contains most power. The length of the window is measured in terms of the number of symbol periods over which it extends and thus the length of the window in practice is the number of symbol periods over which the Viterbi equaliser can use the multipath components, i.e. the system specified worst case multipath delay. For example a 16 state binary equaliser would employ a 5 bit period window for a binary modulation scheme. The total time segment of channel response power that the window is slid over is determined by the overall timing uncertainty in receiving the embedded training sequence. This uncertainty depends on timing accuracy in the receiver and the worst case multipath interference.

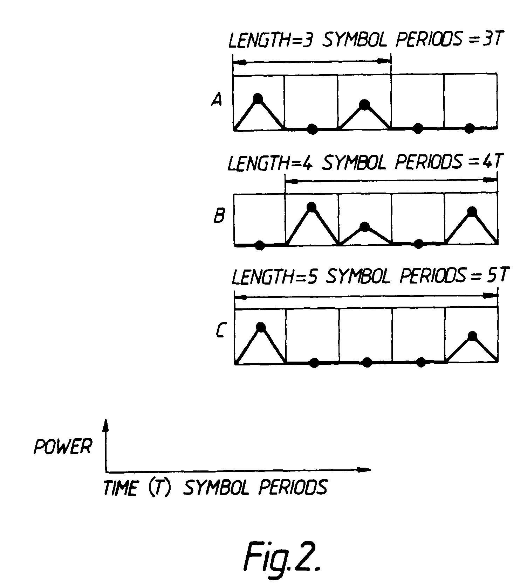

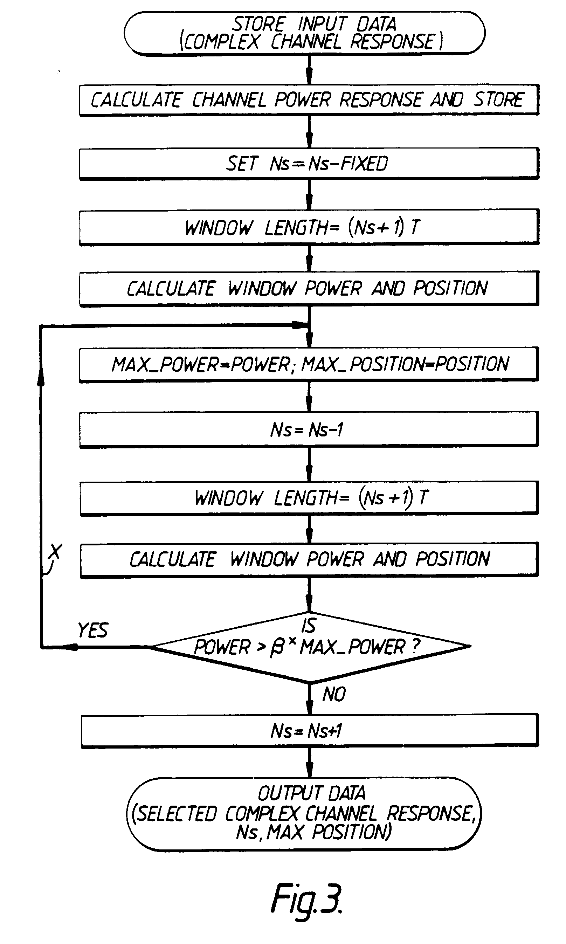

In known Viterbi equalisers the window length is fixed and set to the system specified worst case multipath interference condition and thus the Viterbi computational load is set to a corresponding high level irrespective of the level of multipath interference received. In contradistinction, in the present arrangement as will hereinafter be explained, the window length is varied to match the multipath interference whereby the computational load is varied correspondingly as appropriate. In operation of the windowing unit 4, a full window is arranged to select a portion of the measured channel response initially but then the size of the window is progressively reduced by one symbol period at a time. The energy in the reduced window is compared to that in the full window to determine if significant channel response energy has been lost. If not, the window length is again reduced and the process repeated. The action of the windowing on the channel power response is illustrated in Figure 2.

Referring now to Figure 2, four plots A, B and C are shown, which are simple plots of the channel power against time with a fixed window length of 5 symbol periods. In plot A it will be apparent that a window length of only 3 symbol periods is required; in plot B it is apparent that a window length of only 4 symbol periods is required, whereas in plot C it is apparent that due to the duration of the multipath interference the full window aperture of 5 symbol periods is required. Thus under these conditions as shown in Figure 2, the overall window duration is not fixed at 5 symbol periods but is arranged to adapt to the shortest duration which does not exclude any significant power in the channel response.

The windowing unit 4 thus produces an output signal for a reference signal generator 5 comprising complex samples of a selected channel response which extends over a variable number of symbol periods up to the full window length. Additionally a time reference signal is provided on broken line 6 for the buffer store 4 which serves to remove any time uncertainty from the received signal samples and establishes a time reference point for equalisation purposes appertaining to the data samples stored in the buffer store 3. Additionally the windowing unit produces on a line 7 a signal ^{N} _{S} representing the number of Viterbi states. ^{N} _{S} is set in accordance with the selected window length and the number of states in the equaliser is then 2 ^{N} _{S}. The signal ^{N} _{S} is fed to the unit 5 to control the number of reference signals, two being required for each state of the Viterbi algorithm. The signal ^{N} _{S} is also fed to other parts of the Viterbi algorithm processor.

The manner in which the signal ^{N} _{S} is generated is illustrated by the flow diagram of Figure 3 whereby output data corresponding to the signal ^{N} _{S} and the selected complex channel response are produced. Thus complex samples of the channel response are squared and summed to produce the channel power response which is stored for use within the windowing unit 2. ^{N} _{S} fixed is the starting value for ^{N} _{S} corresponding to the maximum number of states (2^{N} _{S} fixed) that the Viterbi equaliser can operate with. A sliding window is dimensioned to a time duration (^{N} _{S} + 1) T seconds or (^{N} _{S} + 1) symbol periods. This is effectively slid over the time samples of the channel power response and the power contained within the window is calculated for each window position. The greatest power calculated, and the position of the window in terms of symbol periods from the start of the channel power response is returned via line x as the variables power and position, as shown in the flow diagram Figure 3. Power and position are stored in Max-Power and Max-Position for comparison with other values of power and position calculated for a smaller ^{N} _{S} (and hence the shorter time duration window).

The windowing unit 4 reduces ^{N} _{S} by 1, calculates the new power and position, and compares power with Max-Power. If power is almost as great as Max-Power (i.e. β is slightly less than 1) there is no significant energy lost by employing a shorter window, i.e. there is no significant multipath interference outside the shorter window. A smaller ^{N} _{S} reduces the number of states needed in the Viterbi algorithm processor, (as will hereinafter be described,) the number of branch metrics used by the Viterbi algorithm processor and the number of reference signals generated in the reference signal generator unit 5.

^{N} _{S} is decremented repeatedly until significant channel power response is lost by using a shorter window, i.e. there is multipath interference outside the shorter window. When this happens ^{N} _{S} is restored to the last acceptable value and the windowing unit 4 produces as an output signal (^{N} _{S} + 1) complex samples of the channel response, and starting at a time offset of Max-Position symbol periods, outputs the parameter ^{N} _{S} to the Viterbi algorithm processor and outputs Max-Position to the buffer store 3.

The reference signal generator unit 5 serves to generate a set of reference signals for the Viterbi algorithm from the complex channel response samples fed from the windowing unit 2. A reference signal is generated for each permutation of data symbols of length (^{N} _{S} + 1) symbols, i.e. there will be (2 ^{N} _{S} + 1) reference signals in total. These reference signals are what transmitted data symbols should look like with the actual measured channel response. They are generated by convolving the windowed complex channel response with the (2 ^{N} _{S} + 1) signals representing all possible transmitted sequences of signals. For a 16 state equaliser there are 32 reference signals which are outputed from the reference signal generator unit 5.

Since ^{N} _{S} is not fixed, but rather is a variable integer, flexibility is introduced into the reference signal generator 5 since ^{N} _{S} could correspond to any integer value up to a maximum of ^{N} _{S} fixed which corresponds to the full window or worst case multipath interference situation.

The signal generator 5 and the buffer store 3 feed signals to a Viterbi algorithm processor 19 which is standard and which comprises a branch metrics calculator 17 which is arranged to feed via lines 8 and 18 a trellis processor 9. The trellis processor comprises an accumulated metrics store 10 which receives signals from a comparator and selector unit 11. The comparator and selector unit 11 is fed from a metrics accumulator 12, the metrics accumulator being fed from the accumulated metrics store 10. Signals from the comparator and selector unit 11 are fed to a path store 13 from which an output signal is delivered on a line 14. As already explained, the Viterbi algorithm processor just before described is standard and well known with the exception only that the number of states is flexible and controlled by signals on the line 7 which are fed to the branch metrics calculator unit 17 whereby the branch metrics are adapted in accordance with the ^{N} _{S} signal and wherein the signal ^{N} _{S} is also fed to the trellis processor 9 whereby the number of states utilised by the Viterbi algorithm is adapted in accordance with the ^{N} _{S} signal.

In operation of the equaliser each received data symbol is effectively compared with all possible symbols by calculating the Euclidean distance. These distances are known as branch metrics. The branch metrics as determined by the branch metrics unit 17 are then summed by the metrics accumulator 12 with the appropriate accumulated metrics stored in the accumulated metrics store 10. The accumulated metrics entering each state are compared to find a survivor which is then stored back into the accumulated metrics store via line 15. The result of the comparison of the accumulated metrics provides inputs to the path store via a line 16 to record the sequence of received data bits. It will be appreciated that in operation of the equaliser the branch metrics calculator 17 and the trellis processor 9 must adapt to ^{N} _{S} states up to a maximum of 2 ^{N} _{S} fixed states.

Various modifications may be made to the arrangement shown without departing from the scope of the invention as will be appreciated by those skilled in the art.

## Claims

1. An equaliser of the kind using a Viterbi algorithm for signal processing to reduce the effects of multipath interference, characterised by means (2) for measuring multipath interference duration, signal processor means (19) operative in accordance with a Viterbi algorithm having a selected number of states, and means (4) for adapting the number of states in dependence upon multipath interference duration as measured.

2. An equaliser as claimed in claim 1, wherein the means for measuring multipath interference duration comprises a measurement unit (2) and the means for adapting the number of states is a windowing unit (4), and wherein the signal processor means (19) comprises a trellis processor (9) and a branch metrics calculator (17), the windowing unit (4) being responsive to the measuring unit (2) for providing a control signal derived in accordance with measured multipath interference duration, which control signal is utilised to adapt the number of branch metrics and the number of states in the Viterbi algorithm of the trellis processor (9) whereby the computational load is varied in dependence upon the multipath interference duration.

3. An equaliser as claimed in claim 2, wherein a reference signal generator (5) is provided which is arranged to be responsive to the windowing unit (4), which said reference signal generator feeds the branch metrics calculator (17) and the trellis processor (9), the number or reference signals generated being adapted in accordance with multipath interference duration.

4. An equaliser as claimed in claim 3, wherein signals fed to the measurement unit (2) are fed also to the branch metrics calculator (17) via a buffer store (3).

5. An equaliser as claimed in claim 4, wherein the trellis processor (9) comprises a metrics accumulator (12) fed from the metrics calculator (17), an accumulated metrics store (10) which feeds the metrics accumulator (12) and a comparator unit (11) which is responsive to the metrics accumulator (12) for updating the accumulated metrics store (10) and for providing a signal for a path store (13) which in turn provides an output signal from the trellis processor(9).

## Patentansprüche

1. Entzerrer für Signalverarbeitung unter Verwendung eines Viterbi-Algorithmus zur Verringerung der Effekte von Störungen auf Grund eines Mehrwegeempfanges, gekennzeichnet durch ein Mittel (2) zum Messen der Mehrwegestörungsdauer, ein Signalverarbeitungsmittel (19), welches nach einem Viterbi-Algorithmus mit einer gewählten Anzahl von Zuständen arbeitet, sowie ein Mittel (4) zum Anpassen der Anzahl der Zustände in Abhängigkeit von der gemessenen Mehrwegestörungsdauer.

2. Entzerrer nach Anspruch 1, bei welchem das Mittel zur Messung der Mehrwegestörungsdauer eine Meßeinheit (2) aufweist und das Mittel zum Anpassen der Anzahl von Zuständen eine Fenstereinheit (4) ist, das Signalverarbeitungsmittel (19) einen Trellisprozessor (9) und einen Zweigmetrikrechner (17) besitzt, die Fenstereinheit (4) in Abhängigkeit von der Meßeinheit (2) ein entsprechend der gemessenen Mehrwegestörungsdauer abgeleitetes Steuersignal liefert und dieses Steuersignal dazu verwendet wird, die Anzahl der Zweigmetriken und die Anzahl der Zustände in dem Viterbialgorithmus des Trellisprozessors (9) anzupassen, wodurch die Rechenlast in Abhängigkeit von der Mehrwegestörungsdauer geändert wird.

3. Entzerrer nach Anspruch 2, bei welchem ein Referenzsignalgenerator (5) vorgesehen ist, welcher dazu eingerichtet ist, auf die Fenstereinheit (4) anzusprechen, wobei der Referenzsignalgenerator den Zweigmetrikrechner (17) und den Trellisprozessor (9) speist und die Anzahl der erzeugten Referenzsignale entsprechend der Mehrwegestörungsdauer angepaßt wird.

4. Entzerrer nach Anspruch 3, bei welchem der Meßeinheit (2) zugeführte Signale über einen Pufferspeicher (3) auch dem Zweigmetrikrechner (17) zugeführt werden.

5. Entzerrer nach Anspruch 4, bei welchem der Trellisprozessor (9) einen von dem Metrikrechner (17) gespeisten Metrikakkumulator (12), einen den Metrikakkumulator (12) speisenden Metriksummenspeicher (10) sowie eine Komparatoreinheit (11) aufweist, welche auf den Metrikakkumulator (12) anspricht, um den Metriksummenspeicher (10) zu aktualisieren und um ein Signal für einen Pfädspeicher (13) zu liefern, der seinerseits ein Ausgangssignal des Trellisprozessors (9) liefert.

## Revendications

1. Egaliseur du type mettant en oeuvre un algorithme de Viterbi pour le traitement de signaux avec réduction des effets des interférences suivant plusieurs trajets, caractérisé par un dispositif (2) de mesure de la durée des interférences suivant plusieurs trajets, un dispositif processeur de signaux (19) mettant en oeuvre un algorithme de Viterbi avec un nombre choisi d'états, et un dispositif (4) d'adaptation du nombre d'états d'après la durée mesurée des interférences suivant plusieurs trajets.

2. Egaliseur selon la revendication 1, dans lequel le dispositif de mesure de la durée des interférences suivant plusieurs trajets comporte une unité (2) de mesure, le dispositif d'adaptation du nombre d'états est une unité (4) à fenêtre, et le dispositif processeur de signaux (19) comprend un processeur en treillis (9) et un calculateur (17) de métriques de branche, l'unité à fenêtre (4) étant commandée par l'unité de mesure (2) afin qu'elle donne un signal de commande dérivé en fonction de la durée mesurée des interférences suivant plusieurs trajets, le signal de commande étant utilisé pour l'adaptation du nombre de métriques de branche et du nombre d'états dans l'algorithme de Viterbi du processeur en treillis (9), de manière que la charge de calcul varie avec la durée des interférences suivant plusieurs trajets.

3. Egaliseur selon la revendication 2, dans lequel un générateur (5) de signaux de référence est incorporé et est disposé afin qu'il soit commandé par l'unité à fenêtre (4), le générateur d'un signal de référence alimentant le calculateur de métriques de branche (17) et le processeur en treillis (9), le nombre ou les signaux de référence créés étant adaptés en fonction de la durée des interférences suivant plusieurs trajets.

4. Egaliseur suivant la revendication 3, dans lequel les signaux transmis à l'unité de mesure (2) parvienne aussi au calculateur de métriques de branche (17) par l'intermédiaire d'une mémoire tampon (3).

5. Egaliseur selon la revendication 4, dans lequel le processeur en treillis (9) comporte un accumulateur (12) de métriques qui est alimenté par la calculateur de métriques (17), une mémoire (10) de métriques cumulées qui alimente l'accumulateur de métriques (12), et une unité de comparateur (11) qui est commandée par l'accumulateur de métriques (12) et qui est destinée à remettre à jour la mémoire de métriques cumulées (10) et à transmettre un signal destiné à la mémoire de trajets (13) qui donne à son tour un signal de sortie destiné au processeur en treillis (9).
